# EUROPEAN PATENT APPLICATION

(11) **EP 4 722 152 A1**
(43) Date of publication of application: **08.04.2026**
(21) Application number: 24866802.2
(22) Date of filing: 22.03.2024
(51) Int. Cl.: C01B 25/45, H01M 4/58, H01M 10/0525

(54) **AMMONIUM MANGANESE FERRIC PHOSPHATE AND LITHIUM MANGANESE IRON PHOSPHATE, PREPARATION METHODS THEREFOR, AND USES THEREOF**

(30) Priority: 18.09.2023 CN 202311199268
(71) Applicant: Ningbo Ronbay New Energy Technology Co., Ltd., Yuyao Ningbo, Zhejiang 315402 (CN)
(72) Inventor: LI, Tingting, Ningbo, Zhejiang 315402 (CN); NIU, Lei, Ningbo, Zhejiang 315402 (CN); LUO, Mingming, Ningbo, Zhejiang 315402 (CN); ZHANG, Tao, Ningbo, Zhejiang 315402 (CN); ZHENG, Mingzhao, Ningbo, Zhejiang 315402 (CN)
(74) Representative: J A Kemp LLP
(86) International application number: PCT/CN2024/083395
(87) International publication number: WO 2025/060376

(57) **Abstract**

The present application relates to ammonium manganese iron phosphate and lithium manganese iron phosphate, and preparation method and application thereof. The ammonium manganese iron phosphate has a chemical formula of (NH₄)_{(3-2x-2y)}FeₓMn_{y}PO₄·H₂O, where 0 < x ≤ 0.5, x + y < 1, a ratio of the diffraction peak area of (010) crystal plane to that of (121) crystal plane is less than 1.40, and the ammonium manganese iron phosphate is free of SO₄²⁻, Cl⁻, Na⁺, and K⁺, or the ammonium manganese iron phosphate includes at least one impurity ion of SO₄²⁻, Cl⁻, Na⁺, or K⁺, with a concentration of any one impurity ion in the ammonium manganese iron phosphate being less than 500 ppm. The ammonium manganese iron phosphate of the present application, serving as a precursor for the lithium manganese iron phosphate, not only enables the lithium manganese iron phosphate to have high compaction density but also can result in that (Fe + Mn)/P < 1 in the lithium manganese iron phosphate. Therefore, when used as a positive electrode material in lithium-ion batteries, the lithium manganese iron phosphate can improve specific capacity and cycling performance.

## Description

This application claims priority to Chinese Patent Application No. 202311199268.8, filed with the China National Intellectual Property Administration on September 18, 2023, entitled "AMMONIUM MANGANESE IRON PHOSPHATE AND LITHIUM MANGANESE IRON PHOSPHATE, AND PREPARATION METHOD AND APPLICATION THEREOF", which is hereby incorporated by reference in its entirety.

### TECHNICAL FIELD

The present application relates to the technology field of lithium-ion batteries and, in particular, to ammonium manganese iron phosphate and lithium manganese iron phosphate, and preparation method and application thereof.

### BACKGROUND

Compared with lithium iron phosphate, lithium manganese iron phosphate has a comparable specific capacity but a higher voltage plateau; and its energy density is approximately 20% higher than that of lithium iron phosphate. Therefore, lithium manganese iron phosphate, as a new-generation upgraded lithium iron phosphate material, has become one of the most promising positive electrode active materials for lithium-ion batteries. Currently, mass-produced lithium manganese iron phosphate positive electrode materials are mostly prepared via a high-temperature solid-state method. Due to the large variety of raw materials, batch instability issue is highly likely to occur. Moreover, solid-phase mixing makes it difficult to achieve atomic-level mixing of Fe, Mn, and P. Consequently, current lithium manganese iron phosphate positive electrode materials are mostly used in the two-wheeled vehicle field.

In addition, co-precipitation method for synthesizing lithium manganese iron phosphate precursors containing Fe, Mn, and P will become the most promising route for lithium manganese iron phosphate. However, because Fe and Mn have different valence states, the types of precursors synthesized are also different. Among them, Mn³⁺ is highly prone to disproportionation reactions in aqueous solutions, generating Mn²⁺ and MnO₂, which makes the synthesis of FeₓMn₁₋ₓPO₄ significantly more difficult than that of FePO₄. While precursors composed of Fe²⁺, Mn²⁺, and P are relatively easy for synthesization. However, due to (Fe + Mn)/P > 1, additional phosphorus sources need to be supplemented during preparation, making it impossible to truly achieve atomic-level mixing of all Fe, Mn, and P. Therefore, there is a need to develop a lithium manganese iron phosphate precursor that is easy to be synthesized and capable of achieving superior electrochemical performance.

### SUMMARY

Based on this, it is necessary to provide an ammonium manganese iron phosphate, a lithium manganese iron phosphate, and preparation method and application thereof to address the above problems. The ammonium manganese iron phosphate, serving as a precursor for the lithium manganese iron phosphate, not only enables the lithium manganese iron phosphate to have high compaction density but also ensures that (Fe + Mn)/P < 1 in the lithium manganese iron phosphate. As a result, when used as a positive electrode material in lithium-ion batteries, the lithium manganese iron phosphate can improve specific capacity and cycling performance.

An ammonium manganese iron phosphate serving as a precursor for lithium manganese iron phosphate is provided, which has a chemical formula of (NH₄)_{(3-2x-2y)}FeₓMn_{y}PO₄·H₂O, where 0 < x ≤ 0.5, x + y < 1, a ratio of the diffraction peak area of (010) crystal plane to that of (121) crystal plane is less than 1.40, and the ammonium manganese iron phosphate is free of SO₄²⁻, Cl⁻, Na⁺, and K⁺, or the ammonium manganese iron phosphate includes at least one impurity ion selected from SO₄²⁻, Cl⁻, Na⁺, or K⁺, with a concentration of any one impurity ion in the ammonium manganese iron phosphate being less than 500 ppm.

In an embodiment, 0.5 < y < 0.9.

In an embodiment, a total concentration of all impurity ions in the ammonium manganese iron phosphate is less than 1000 ppm.

In an embodiment, the ammonium manganese iron phosphate is flake-shaped, and has a particle size D₅₀ less than 20 µm.

A preparation method for the ammonium manganese iron phosphate as described above includes the following steps:
performing a primary reaction between a mixed iron-manganese salt solution and a carbonate solution, and performing separation to obtain manganese iron carbonate;
performing a secondary reaction by mixing a phosphorus source solution with the manganese iron carbonate, and performing separation to obtain the ammonium manganese iron phosphate; where a molar amount of phosphorus source in the phosphorus source solution is 1 - 1.5 times a total molar amount of iron source and manganese source in the mixed iron-manganese salt solution.

In an embodiment, the mixed iron-manganese salt solution includes an iron source, a manganese source, and an antioxidant, where a molar ratio of the iron source to the manganese source is 1:9 - 1:1, and a mass of the antioxidant is 0.5% - 2.0% of a mass of the iron source.

In an embodiment, the iron source is selected from at least one of ferrous sulfate, ferrous chloride, and iron acetate;
and/or, the manganese source is selected from at least one of manganese sulfate, manganese chloride, and manganese acetate;
and/or, the antioxidant is selected from at least one of citric acid, ascorbic acid, formaldehyde, salicylic acid, and oxalic acid.

In an embodiment, a molar amount of the carbonate is 1 - 3 times a total molar amount of the iron source and the manganese source in the mixed iron-manganese salt solution, and the carbonate is selected from at least one of ammonium bicarbonate, sodium carbonate, and potassium carbonate.

In an embodiment, the phosphorus source is selected from at least one of ammonium dihydrogen phosphate, diammonium hydrogen phosphate, trisodium phosphate, tripotassium phosphate, and phosphoric acid; and the phosphorus source includes ammonium ion.

In an embodiment, when the phosphorus source includes at least one of trisodium phosphate, tripotassium phosphate, and phosphoric acid, the ammonium ion is derived from at least one of ammonium dihydrogen phosphate, diammonium hydrogen phosphate, and aqueous ammonia.

In an embodiment, the secondary reaction is carried out under a protective atmosphere, where a reaction temperature is 20 °C - 80 °C and a reaction time is within 30 hours.

A lithium manganese iron phosphate, prepared from the ammonium manganese iron phosphate as described above, has a chemical formula of LiₙFeₓMn_{y}PO₄, where 0 < x ≤ 0.5, x + y < 1, and 1 ≤ n < 1.2.

A preparation method for the lithium manganese iron phosphate as described above includes the following steps:
compounding a lithium source, a carbon source, and the ammonium manganese iron phosphate as described above to obtain an intermediate product;
calcining the intermediate product in an inert atmosphere to obtain the lithium manganese iron phosphate.

In an embodiment, the ammonium manganese iron phosphate, the lithium source, and the carbon source are subjected to mixing, crushing, and then spray granulating to obtain the intermediate product.

In an embodiment, a molar amount of the lithium source is 1-1.2 times a molar amount of phosphorus element in the ammonium manganese iron phosphate; and the lithium source is selected from at least one of lithium hydroxide, lithium carbonate, lithium acetate, and lithium nitrate;
and/or, a mass of the carbon source is 2% - 14% of a total mass of the lithium source and the ammonium manganese iron phosphate; and the carbon source is selected from at least one of glucose, sucrose, fructose, lactose, citric acid, starch, polyvinylpyrrolidone, polyethylene glycol, polyacrylonitrile, phenolic resin, phenylalanine, graphite, graphene, graphene oxide, and carbon nanotubes.

In an embodiment, the calcining is selected from a multi-gradient heat treatment process, which includes: a first stage of heating to 300 °C - 400 °C at a rate of 0.4 °C/min - 1.6 °C/min and holding within 3 hours; and a second stage of heating to 600 °C - 800 °C and holding for 5 - 20 hours.

The lithium manganese iron phosphate as described above is used as a positive electrode material in lithium-ion batteries.

On one hand, due to that (Fe + Mn)/P < 1, the ammonium manganese iron phosphate provided by the present application enables that (Fe + Mn)/P < 1 in the lithium manganese iron phosphate, thereby effectively preventing excess manganese ions and/or iron ions from blocking lithium-ion diffusion channels, thus reducing the impedance of lithium-ion batteries and improving their specific capacity and cycling performance. On the other hand, by controlling a ratio of the diffraction peak area of (010) crystal plane to that of (121) crystal plane to be less than 1.40, and simultaneously regulating a concentration of impurity ions in the ammonium manganese iron phosphate, the ammonium manganese iron phosphate is free of SO₄²⁻, Cl⁻, Na⁺, and K⁺, or the concentration of any one impurity ion among SO₄²⁻, Cl⁻, Na⁺, and K⁺ is less than 500 ppm in the ammonium manganese iron phosphate, which is beneficial for significantly enhancing the quality of lithium manganese iron phosphate, thereby further improving the specific capacity and cycling performance of lithium-ion batteries.

In addition, the present application utilizes a two-step precipitation: first, manganese iron carbonate with good sphericity and a particle size D₅₀ less than 20 µm is prepared; subsequently, a phosphorus source is added in a specific ratio to convert manganese iron carbonate precipitate into ammonium manganese iron phosphate with controllable particle size. This not only facilitates improving the compaction density of lithium manganese iron phosphate but also enables more complete reaction of Fe, Mn, and P. The reaction process requires no pH control and no addition of complexing agents, and is simple in operation.

Therefore, the ammonium manganese iron phosphate provided by the present application, serving as a precursor for lithium manganese iron phosphate, not only enables the lithium manganese iron phosphate to have high compaction density, but also ensures that (Fe + Mn)/P < 1 in the lithium manganese iron phosphate. Furthermore, when used as a positive electrode material in lithium-ion batteries, the lithium manganese iron phosphate can improve specific capacity and cycling performance.

### BRIEF DESCRIPTION OF DRAWINGS

FIG. 1 is an SEM image of ammonium manganese iron phosphate provided in Example 1 of the present application at 2000x magnification.
FIG. 2 is an XRD pattern of ammonium manganese iron phosphate provided in Example 1 of the present application.
FIG. 3 is an SEM image of lithium manganese iron phosphate provided in Example 1 of the present application at 1000x magnification.
FIG. 4 is an XRD pattern of lithium manganese iron phosphate provided in Example 1 of the present application.
FIG. 5 is a 0.2C charge-discharge curve of a button cell prepared using lithium manganese iron phosphate provided in Example 1 of the present application as a positive electrode material.
FIG. 6 is an SEM image of ammonium manganese iron phosphate provided in Comparative Example 1 of the present application at 2000x magnification.
FIG. 7 is an XRD pattern of ammonium manganese iron phosphate provided in Comparative Example 1 of the present application.

### DESCRIPTION OF EMBODIMENTS

In order to facilitate understanding of the present application, the following provides a more detailed description of the present application. However, it should be understood that the present application may be implemented in many different forms and is not limited to embodiments or examples described herein. Rather, the purpose of providing these embodiments or examples is to make a thorough and comprehensive understanding of the disclosure of the present application.

Unless otherwise defined, all technical and scientific terms used herein have the same meaning as those commonly understood by those skilled in the art to which the present application pertains. In this document, the terms used in the specification of this application are intended solely for the purpose of describing specific embodiments or examples and are not intended to limit the present application. The optional scope of the term "and/or" used herein encompasses any one of two or more relevant listed items, as well as any and all combinations of the relevant listed items, where the any and all combinations include a combination of any two relevant listed items, a combination of any more relevant listed items, or a combination of all relevant listed items.

The present application provides an ammonium manganese iron phosphate serving as a precursor for lithium manganese iron phosphate, which has a chemical formula (NH₄)_{(3-2x-2y)}FeₓMn_{y}PO₄·H₂O, where 0 < x ≤ 0.5, x + y < 1, a ratio of the diffraction peak area of (010) crystal plane to that of (121) crystal plane is less than 1.40; and the ammonium manganese iron phosphate is free of SO₄²⁻, Cl⁻, Na⁺, and K⁺, or the ammonium manganese iron phosphate includes at least one impurity ion of SO₄²⁻, Cl⁻, Na⁺, or K⁺, with a concentration of any one impurity ion in the ammonium manganese iron phosphate being less than 500 ppm. Preferably, 0.5 < y < 0.9, 0.975 < x + y < 1, and further preferably, 0.55 < y < 0.7.

On one hand, due to that (Fe + Mn)/P < 1, the ammonium manganese iron phosphate provided by the present application enables that (Fe + Mn)/P < 1 in the lithium manganese iron phosphate, thereby effectively preventing excess manganese ions and/or iron ions from blocking lithium-ion diffusion channels, thus reducing the impedance of lithium-ion batteries and improving their specific capacity and cycling performance. On the other hand, by controlling a ratio of the diffraction peak area of (010) crystal plane to that of (121) crystal plane to be less than 1.40, and simultaneously regulating a concentration of impurity ions in the ammonium manganese iron phosphate, the ammonium manganese iron phosphate is free of SO₄²⁻, Cl⁻, Na⁺, and K⁺, or the concentration of any one impurity ion among SO₄²⁻, Cl⁻, Na⁺, and K⁺ is less than 500 ppm in the ammonium manganese iron phosphate, which is beneficial for significantly enhancing the quality of lithium manganese iron phosphate, thereby further improving the specific capacity and cycling performance of lithium-ion batteries.

Preferably, the ratio of the diffraction peak area of (010) crystal plane to that of (121) crystal plane is less than 1.20, which is beneficial for further improving the quality of the lithium manganese iron phosphate and reducing the impact of impurities in the lithium manganese iron phosphate on the electrolyte.

More preferably, the ammonium manganese iron phosphate is free of SO₄²⁻, Cl⁻, Na⁺, and K⁺, which is more conducive to preparing high-quality lithium manganese iron phosphate.

When the ammonium manganese iron phosphate includes at least one impurity ion of SO₄²⁻, Cl⁻, Na⁺, or K⁺, preferably, a concentration of the impurity ion SO₄²⁻ or Cl⁻ is less than 500 ppm, and a concentration of the impurity ion Na⁺ or K⁺ is less than 200 ppm. Further preferably, a total concentration of all impurity ions in the ammonium manganese iron phosphate is less than 1000 ppm.

It should be noted that due to the different types of metal salts and carbonates used in the preparation of the ammonium manganese iron phosphate, the impurity ions contained in the ammonium manganese iron phosphate also vary.

Specifically, when the metal salt is selected from metal sulfates, a concentration of sulfate ion impurity in the ammonium manganese iron phosphate is less than 500 ppm; when the metal salt is selected from metal chlorides, a concentration of chloride ion impurity in the ammonium manganese iron phosphate is less than 500 ppm; when the metal salt is selected from metal acetates, a concentration of acetate ion impurity in the ammonium manganese iron phosphate is less than 500 ppm; when the carbonate is selected from sodium carbonate, a concentration of sodium ion impurity in the ammonium manganese iron phosphate is less than 200 ppm; when the carbonate is selected from potassium carbonate, a concentration of potassium ion impurity in the ammonium manganese iron phosphate is less than 200 ppm.

Preferably, the ammonium manganese iron phosphate is flake-shaped with a particle size D₅₀ of less than 20 µm, which helps to improve the compaction density of the lithium manganese iron phosphate, thereby enhancing its electrical performance.

The present application further provides a preparation method for the ammonium manganese iron phosphate as described above, including the following steps:
S11, performing a primary reaction between a mixed iron-manganese salt solution and a carbonate solution, and separating to obtain manganese iron carbonate;
S12, performing a secondary reaction by mixing a phosphorus source solution with the manganese iron carbonate, and separating to obtain the ammonium manganese iron phosphate; where a molar amount of phosphorus source in the phosphorus source solution is 1 - 1.5 times a total molar amount of iron source and manganese source in the mixed iron-manganese salt solution.

In step S11, the primary reaction between the mixed iron-manganese salt solution and the carbonate solution can produce the manganese iron carbonate with good sphericity and a particle size D₅₀ of less than 20 µm, which is beneficial for controlling a size of the ammonium manganese iron phosphate.

Preferably, a molar amount of the carbonate is 1 - 3 times a total molar amount of the iron source and manganese source in the mixed iron-manganese salt solution, which facilitates the full reaction of the iron source and manganese source to form the manganese iron carbonate.

Specifically, the carbonate is selected from soluble carbonates, and further preferably is at least one of ammonium bicarbonate, sodium carbonate, and potassium carbonate. When the carbonate is selected from ammonium bicarbonate, considering that bicarbonate ions in the ammonium bicarbonate undergo simultaneous ionization and hydrolysis, a molar amount of the ammonium bicarbonate is preferably 2 - 3 times a total molar amount of the iron source and manganese source in the mixed iron-manganese salt solution.

In an embodiment, the reaction mode between the mixed iron-manganese salt solution and the carbonate solution can be selected from the following three types: using the mixed iron-manganese salt solution as base solution, adding the carbonate solution under the protection of an inert gas and reacting for 1 - 10 hours to ensure complete reaction; or, using water as base solution, simultaneously adding the mixed iron-manganese salt solution and the carbonate solution, and reacting for 1 - 10 hours to ensure complete reaction; or, using the carbonate solution as base solution, adding the mixed iron-manganese salt solution under the protection of an inert gas and reacting for 1 - 10 hours to ensure complete reaction.

The mixed iron-manganese salt solution includes an iron source, a manganese source, and an antioxidant, where a molar ratio of the iron source to the manganese source is 1:9 - 1:1, more preferably 1:2.4 - 1:1.2; and a mass of the antioxidant is 0.5% - 2.0% of a mass of the iron source, more preferably 0.5% - 1.0%.

Specifically, the iron source is selected from at least one of ferrous sulfate, ferrous chloride, and iron acetate.

The manganese source is selected from at least one of manganese sulfate, manganese chloride, and manganese acetate.

The antioxidant is selected from at least one of citric acid, ascorbic acid, formaldehyde, salicylic acid, and oxalic acid.

In an embodiment, the separation mode after the primary reaction includes: allowing the mixed solution of the primary reaction to settle freely, and removing the supernatant. This greatly reduces the concentration of impurity ions during the precipitation of the manganese iron carbonate, and can reduce an amount of washing water, which helps reduce the concentration of impurity ions in the final product of ammonium manganese iron phosphate, making the concentration of impurity ions in the ammonium manganese iron phosphate less than 1000 ppm.

In step S12, based on the prepared manganese iron carbonate with good sphericity and a particle size D₅₀ of less than 20 µm, adding a phosphorus source in a specific ratio may convert the manganese iron carbonate precipitate into the ammonium manganese iron phosphate with controllable particle size. That is, its morphology undergoes a transformation from spherical particles to flake shape and its overall particle size remains D₅₀ of less than 20 µm, which not only facilitates to improve the compaction density of lithium manganese iron phosphate, but also enables more complete reaction of Fe, Mn, and P. The reaction process requires no pH control and no addition of complexing agent, and is simple in operation.

In an embodiment, the phosphorus source solution is preferably fed within 2 hours, which can effectively avoid problems such as incomplete precipitation conversion caused by enhanced crystallinity of the manganese iron carbonate due to long-term aging.

In an embodiment, the phosphorus source is selected from at least one of ammonium dihydrogen phosphate, diammonium hydrogen phosphate, trisodium phosphate, tripotassium phosphate, and phosphoric acid; and the phosphorus source contains ammonium ions.

Specifically, the phosphorus source may be directly selected from ammonium dihydrogen phosphate and/or diammonium hydrogen phosphate; or, when the phosphorus source includes at least one of trisodium phosphate, tripotassium phosphate, and phosphoric acid, the ammonium ions in the phosphorus source may be derived from ammonium dihydrogen phosphate and/or diammonium hydrogen phosphate, or from aqueous ammonia, or from a mixture of ammonium dihydrogen phosphate and/or diammonium hydrogen phosphate with aqueous ammonia. The present application does not limit this. Optionally, when the phosphorus source includes at least one of trisodium phosphate, tripotassium phosphate, and phosphoric acid, the phosphorus source further includes ammonium dihydrogen phosphate and/or diammonium hydrogen phosphate; and during the secondary reaction, aqueous ammonia is also added to supplement ammonium ions for the ammonium manganese iron phosphate.

In an embodiment, the secondary reaction is carried out under a protective atmosphere, with a reaction temperature of 20 °C - 80 °C, more preferably 20 °C - 50 °C; and a reaction time within 30 hours, more preferably 10 - 15 hours. In the secondary reaction, a stirring speed of 200 rpm - 900 rpm is provided, which ensures a more complete reaction. Where, the protective atmosphere is selected from inert gases, preferably at least one of nitrogen, helium, argon, and neon.

The present application further provides a lithium manganese iron phosphate prepared from the ammonium manganese iron phosphate as described above, which has a chemical formula LiₙFeₓMn_{y}PO₄, where 0 < x ≤ 0.5, x + y < 1, and 1 ≤ n < 1.2.

The ammonium manganese iron phosphate described in the present application, as a precursor for the lithium manganese iron phosphate, not only enables the lithium manganese iron phosphate to have high compaction density but also can make (Fe + Mn)/P < 1 in the lithium manganese iron phosphate. Therefore, when used as a positive electrode material in lithium-ion batteries, the lithium manganese iron phosphate can improve specific capacity and cycling performance.

The present application further provides a preparation method for the lithium manganese iron phosphate as described above, including the following steps:
S21, compounding a lithium source, a carbon source, and the ammonium manganese iron phosphate as described above to obtain an intermediate product;
S22, calcining the intermediate product in an inert atmosphere to obtain the lithium manganese iron phosphate.

In step S21, preferably, the ammonium manganese iron phosphate, the lithium source, and the carbon source are subjected to mixing, crushing, and then spray granulating to obtain the intermediate product, where a particle size D₅₀ after crushing is preferably 0.1 µm - 1 µm. According to actual product requirements, spray granulation is used to prepare the intermediate product with a certain particle size grading, which is beneficial for obtaining the lithium manganese iron phosphate with high compaction density.

Preferably, a molar amount of the lithium source is 1 - 1.2 times a molar amount of phosphorus element in the ammonium manganese iron phosphate; and a mass of the carbon source is preferably 2% - 14% of a total mass of the lithium source and the ammonium manganese iron phosphate.

Specifically, the lithium source is selected from at least one of lithium hydroxide, lithium carbonate, lithium acetate, and lithium nitrate.

The carbon source is selected from at least one of glucose, sucrose, fructose, lactose, citric acid, starch, polyvinylpyrrolidone, polyethylene glycol, polyacrylonitrile, phenolic resin, phenylalanine, graphite, graphene, graphene oxide, and carbon nanotubes.

In step S22, the calcination is preferably a multi-gradient heat treatment process, which includes: a first stage of heating to 300 °C - 400 °C at a rate of 0.4 °C/min - 1.6 °C/min, and holding within 3 hours; and a second stage of heating to 600°C - 800 °C, and holding for 5 - 20 hours.

The lithium manganese iron phosphate in the present application is used as a positive electrode material in lithium-ion batteries, which enables lithium-ion batteries to exhibit excellent specific capacity and cycling performance.

Below, the ammonium manganese iron phosphate, and lithium manganese iron phosphate, and preparation methods and applications thereof will be further described through the following specific examples.

### Example 1

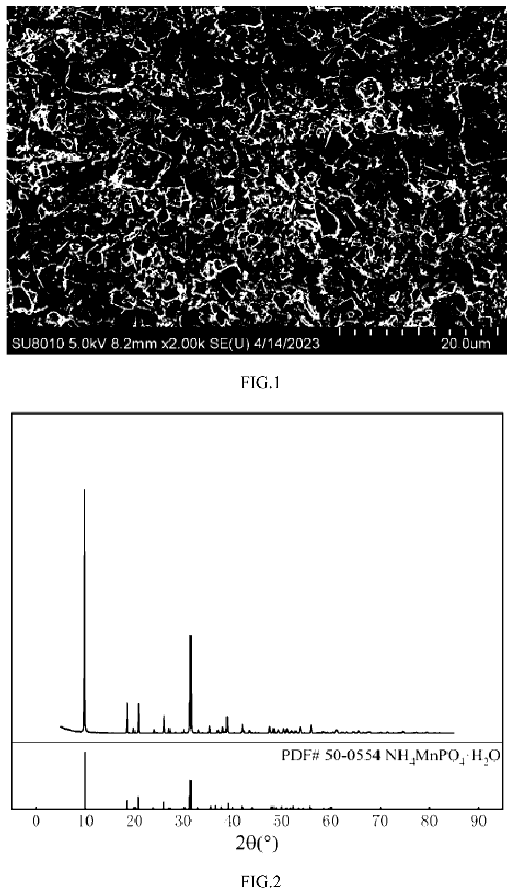

667.25 g of ferrous sulfate heptahydrate and 598.33 g of manganese sulfate monohydrate were taken to prepare a mixed iron-manganese salt solution with a concentration of 1 mol/L, where a molar ratio of Mn²⁺ to Fe²⁺ are approximately 5.9:4.0. 948.68 g of ammonium bicarbonate was taken to prepare ammonium bicarbonate solution with a concentration of 1 mol/L, where a molar amount of ammonium bicarbonate was approximately 2 times a total molar amount of the iron source and manganese source in the mixed iron-manganese salt solution. 690.17 g of ammonium dihydrogen phosphate was taken to prepare ammonium dihydrogen phosphate solution with a concentration of 1 mol/L. Using the mixed iron-manganese salt solution as a base solution, the ammonium bicarbonate solution was introduced into a reactor, with nitrogen continuously introduced throughout the reaction for protection. After feeding was complete, aging was performed for 1 hour, and then the supernatant was extracted. The remaining slurry was heated to 80 °C, and the ammonium dihydrogen phosphate solution was fed, followed by aging for 9 hours after feeding was complete, performing solid-liquid separation and washing, and drying in an oven at 75 °C for 24 hours to obtain ammonium manganese iron phosphate powder. It was found from main element detection and XRD analysis of the sample that a chemical formula of the ammonium manganese iron phosphate was (NH₄)_{1.02}Fe_{0.4}Mn_{0.59}PO₄·H₂O. An SEM image of the ammonium manganese iron phosphate at 2000× magnification was shown in FIG. 1, and its XRD pattern is shown was FIG. 2.

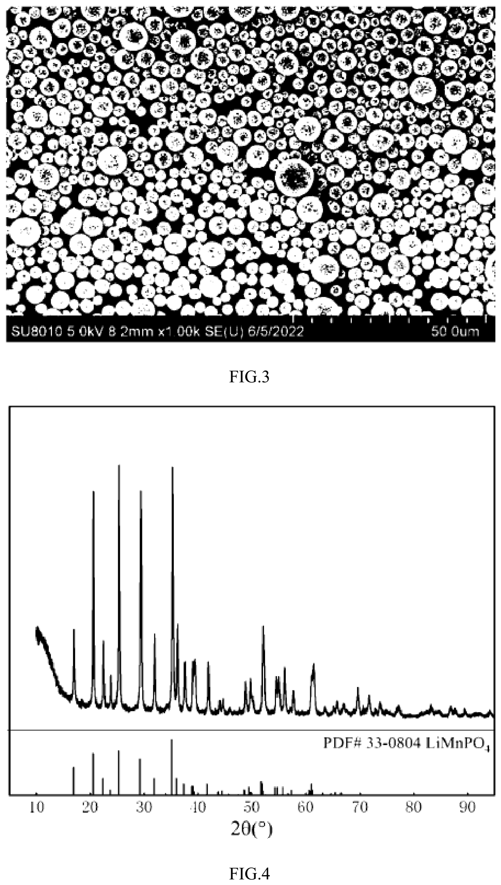

The ammonium manganese iron phosphate, lithium carbonate, glucose, and PEG were weighed according to Li_{1.025}Fe_{0.4}Mn_{0.59}PO₄, with glucose and PEG accounting for 5% and 7% of the total materials, respectively. The above materials were mixed uniformly and ground by wet method to D₅₀ of 0.4 µm, and then subjected to spray drying to obtain an intermediate product with D₅₀ of 3 - 15 µm. Heat treatment was performed on the intermediate product under a nitrogen atmosphere, by heating at a rate of 0.6 °C/min to 370 °C, and then heating at a rate of 2 °C/min to 650 °C and holding for 14 hours. Finally, a positive electrode material of lithium manganese iron phosphate was obtained by jet milling. An SEM image of the lithium manganese iron phosphate at 1000× magnification was shown in FIG. 3, and a XRD pattern was shown in FIG. 4.

### Example 2

500.44 g of ferrous sulfate heptahydrate and 689.60 g of manganese sulfate monohydrate were taken to prepare a mixed iron-manganese salt solution with a concentration of 1 mol/L, where a molar ratio of Mn²⁺ to Fe²⁺ was approximately 6.8:3.0. 1138.42 g of ammonium bicarbonate was taken to prepare ammonium bicarbonate solution with a concentration of 1.2 mol/L, where a molar amount of ammonium bicarbonate was approximately 2.45 times a total molar amount of the iron source and manganese source in the mixed iron-manganese salt solution. 828.20 g of ammonium dihydrogen phosphate was taken to prepare ammonium dihydrogen phosphate solution with a concentration of 1.2 mol/L. The mixed metal salt and the ammonium bicarbonate solution were fed simultaneously into a reactor filled with pure water, with nitrogen continuously introduced throughout the reaction for protection. After feeding was complete, aging was performed for 2 hours, and then the supernatant was extracted. The remaining slurry was heated to 70 °C, the ammonium dihydrogen phosphate solution was fed, followed by aging for 8 hours after feeding was complete, performing solid-liquid separation and washing, and drying in an oven at 75 °C for 24 hours to obtain ammonium manganese iron phosphate powder. It was found from main element detection and XRD analysis of the sample that a chemical formula of the ammonium manganese iron phosphate was (NH₄)_{1.04}Fe_{0.3}Mn_{0.68}PO₄·H₂O.

The ammonium manganese iron phosphate, lithium carbonate, and sucrose were weighed according to Li_{1.026}Fe_{0.3}Mn_{0.68}PO₄, with sucrose accounting for 10% of the total materials. The above materials were mixed uniformly, and ground by wet method to D₅₀ of 0.2 µm, and then subjected to spray drying to obtain an intermediate product with D₅₀ of 3 - 15 µm. Heat treatment was performed on the intermediate product under a nitrogen atmosphere, by heating at a rate of 0.7 °C/min to 380 °C and holding for 1 hour, and then heating at a rate of 2 °C/min to 670 °C and holding for 14 hours. Finally, a positive electrode material of lithium manganese iron phosphate was obtained by jet milling.

### Example 3

333.63 g of ferrous sulfate heptahydrate and 780.87 g of manganese sulfate monohydrate were taken to prepare a mixed iron-manganese salt solution with a concentration of 1 mol/L, where a molar ratio of Mn²⁺ to Fe²⁺ was approximately 7.7:2.0. 1233.30 g of ammonium bicarbonate was taken to prepare ammonium bicarbonate solution with a concentration of 1.3 mol/L, where a molar amount of ammonium bicarbonate was approximately 2.68 times a total molar amount of the iron source and manganese source in the mixed iron-manganese salt solution. 897.22 g of ammonium dihydrogen phosphate was taken to prepare ammonium dihydrogen phosphate solution with a concentration of 1.3 mol/L. Using the ammonium bicarbonate solution as a base solution, the mixed iron-manganese salt solution was fed into a reactor, with nitrogen continuously introduced throughout the reaction for protection. After feeding was complete, aging was performed for 3 hours, and then the supernatant was extracted. The remaining slurry was heated to 60 °C, and the ammonium dihydrogen phosphate solution was fed, followed by aging for 7 hours after feeding was complete, performing solid-liquid separation and washing, and drying in an oven at 75 °C for 24 hours to obtain ammonium manganese iron phosphate powder. It was found from main element detection and XRD analysis of the sample that a chemical formula of the ammonium manganese iron phosphate was (NH₄)_{1.06}Fe_{0.2}Mn_{0.77}PO₄·H₂O.

The ammonium manganese iron phosphate, lithium carbonate, glucose, and PVP were weighed according to Li_{1.027}Fe_{0.2}Mn_{0.77}PO₄, with glucose and PVP accounting for 6% and 4% of the total materials, respectively. The above materials were mixed uniformly, and ground by wet method to D₅₀ of 0.3 µm, and then subjected to spray drying to obtain an intermediate product with D₅₀ of 3 - 15 µm. Heat treatment was performed on the intermediate product under a nitrogen atmosphere, by heating at a rate of 0.8 °C/min to 390 °C and holding for 1.5 hours, and then heating at a rate of 3 °C/min to 690 °C and holding for 12 hours. Finally, a positive electrode material of lithium manganese iron phosphate was obtained by jet milling.

### Example 4

166.81 g of ferrous sulfate heptahydrate and 872.14 g of manganese sulfate monohydrate were taken to prepare a mixed iron-manganese salt solution with a concentration of 1 mol/L, where a molar ratio of Mn²⁺ to Fe²⁺ was approximately 8.6:1.0. 1138.42 g of ammonium bicarbonate was taken to prepare ammonium bicarbonate solution with a concentration of 1.2 mol/L, where a molar amount of ammonium bicarbonate was approximately 2.5 times a total molar amount of the iron source and manganese source in the mixed iron-manganese salt solution. 897.22 g of ammonium dihydrogen phosphate was taken to prepare ammonium dihydrogen phosphate solution with a concentration of 1.3 mol/L. Using the mixed iron-manganese salt solution as a base solution, the ammonium bicarbonate solution was fed into a reactor, with nitrogen continuously introduced throughout the reaction for protection. After feeding was complete, aging was performed for 4 hours, and then he supernatant was extracted. The remaining slurry was heated to 50 °C, and the ammonium dihydrogen phosphate solution was fed, followed by aging for 6 hours after feeding was complete, performing solid-liquid separation and washing, and drying in an oven at 75 °C for 24 hours to obtain ammonium manganese iron phosphate powder. It was found from main element detection and XRD analysis of the sample that a chemical formula of the ammonium manganese iron phosphate was (NH₄)_{1.08}Fe_{0.1}Mn_{0.86}PO₄·H₂O.

The ammonium manganese iron phosphate, lithium carbonate, and PEG were weighed according to Li_{1.028}Fe_{0.1}Mn_{0.86}PO₄, with PEG accounting for 7.5% of the total materials. The above materials were mixed uniformly, and ground by wet method to D₅₀ of 0.4 µm, and then subjected to spray drying to obtain an intermediate product with D₅₀ of 3 - 15 µm. Heat treatment was performed on the intermediate product under a nitrogen atmosphere, by heating at a rate of 1 °C/min to 400 °C, and then heating at a rate of 4 °C/min to 700 °C and holding for 10 hours. Finally, a positive electrode material of lithium manganese iron phosphate was obtained by jet milling.

### Example 5

834.06 g of ferrous sulfate heptahydrate and 507.06 g of manganese sulfate monohydrate were taken to prepare a mixed iron-manganese salt solution with a concentration of 1 mol/L, where a molar ratio of Mn²⁺ to Fe²⁺ was approximately 4.9:5.0. 1138.42 g of ammonium bicarbonate was taken to prepare ammonium bicarbonate solution with a concentration of 1.2 mol/L, where a molar amount of ammonium bicarbonate was approximately 2.4 times a total molar amount of the iron source and manganese source in the mixed iron-manganese salt solution. 966.24 g of ammonium dihydrogen phosphate was taken to prepare ammonium dihydrogen phosphate solution with a concentration of 1.4 mol/L. Using the mixed iron-manganese salt solution as a base solution, the ammonium bicarbonate solution was fed into a reactor, with nitrogen continuously introduced throughout the reaction for protection. After feeding was complete, aging was performed for 1 hour, and then the supernatant was extracted. The remaining slurry was heated to 40 °C, and the ammonium dihydrogen phosphate solution was fed, followed by aging for 5 hours after feeding was complete, performing solid-liquid separation and washing, and drying in an oven at 75 °C for 24 hours to obtain ammonium manganese iron phosphate powder. It was found from main element detection and XRD analysis of the sample that a chemical formula of the ammonium manganese iron phosphate was (NH₄)_{1.02}Fe_{0.5}Mn_{0.49}PO₄·H₂O.

The ammonium manganese iron phosphate, lithium carbonate, and PVP were weighed according to Li_{1.030}Fe_{0.5}Mn_{0.49}PO₄, with PVP accounting for 5.50% of the total materials. The above materials were mixed uniformly, and ground by wet method to D₅₀ of 0.5 µm, and then subjected to spray drying to obtain an intermediate product with D₅₀ of 3 - 15 µm. Heat treatment was performed on the intermediate product under a nitrogen atmosphere, by heating at a rate of 1.2 °C/min to 400 °C and holding for 1 hour, and then heating at a rate of 5 °C/min to 710°C and holding for 9 hours. Finally, a positive electrode material of lithium manganese iron phosphate was obtained by jet milling.

### Example 6

477.14 g of ferrous chloride tetrahydrate and 700.60 g of manganese chloride tetrahydrate were taken to prepare a mixed iron-manganese salt solution with a concentration of 1 mol/L, where a molar ratio of Mn²⁺ to Fe²⁺ was approximately 5.9:4.0. 635.94 g of sodium carbonate was taken to prepare sodium carbonate solution with a concentration of 1 mol/L, where a molar amount of sodium carbonate was approximately 1.14 times a total molar amount of the iron source and manganese source in the mixed iron-manganese salt solution. 792.36 g of diammonium hydrogen phosphate was taken to prepare diammonium hydrogen phosphate solution with a concentration of 1 mol/L. Using the mixed iron-manganese salt solution as a base solution, the sodium carbonate solution was fed into a reactor, with nitrogen continuously introduced throughout the reaction for protection. After feeding was complete, aging was performed for 2 hours, and then the supernatant was extracted. The remaining slurry was heated to 30 °C, and the diammonium hydrogen phosphate solution was fed, followed by aging for 6 hours after feeding was complete, performing solid-liquid separation and washing, and drying in an oven at 75 °C for 24 hours to obtain ammonium manganese iron phosphate powder. It was found from main element detection and XRD analysis of the sample that a chemical formula of the ammonium manganese iron phosphate was (NH₄)_{1.02}Fe_{0.4}Mn_{0.59}PO₄-H₂O.

The ammonium manganese iron phosphate, lithium carbonate, glucose, and PEG were weighed according to Li_{1.031}Fe_{0.4}Mn_{0.59}PO₄, with glucose and PEG accounting for 5% and 7% of the total materials, respectively. The above materials were mixed uniformly, and ground by wet method to D₅₀ of 0.6 µm, and then subjected to spray drying to obtain an intermediate product with D₅₀ of 3 - 15 µm. Heat treatment was performed on the intermediate product under a nitrogen atmosphere, by heating at a rate of 0.6 °C/min to 370 °C, and then heating at a rate of 2 °C/min to 650 °C and holding for 14 hours. Finally, a positive electrode material of lithium manganese iron phosphate was obtained by jet milling.

### Example 7

417.43 g of iron acetate monohydrate and 867.62 of manganese acetate tetrahydrate were taken to prepare a mixed iron-manganese salt solution with a concentration of 1 mol/L, where a molar ratio of Mn²⁺ to Fe²⁺ was approximately 5.9:4.0. 995.11 g of potassium carbonate was taken to prepare potassium carbonate solution with a concentration of 1.2 mol/L, where a molar amount of potassium carbonate was approximately 1.26 times a total molar amount of the iron source and manganese source in the mixed iron-manganese salt solution. 2736.86 g of trisodium phosphate dodecahydrate was taken to prepare trisodium phosphate solution with a concentration of 1.2 mol/L, and 6 mol aqueous ammonia was added and mixed uniformly. Using the mixed iron-manganese salt solution as a base solution, the potassium carbonate solution was fed into a reactor, with nitrogen continuously introduced throughout the reaction for protection. After feeding was complete, aging was performed for 2 hours, and then the supernatant was extracted. The remaining slurry was maintained the temperature to 20 °C, and the trisodium phosphate solution was fed, followed by aging for 6 hours after feeding was complete, performing solid-liquid separation and washing, and drying in an oven at 75 °C for 24 hours to obtain ammonium manganese iron phosphate powder. It was found from main element detection and XRD analysis of the sample that a chemical formula of the ammonium manganese iron phosphate was (NH₄)_{1.02}Fe_{0.4}Mn_{0.59}PO₄·H₂O.

The ammonium manganese iron phosphate, lithium carbonate, and sucrose were weighed according to Li_{1.032}Fe_{0.4}Mn_{0.59}PO₄, with sucrose accounting for 10% of the total materials. The above materials were mixed uniformly, and ground by wet method to D₅₀ of 0.7 µm, and then subjected to spray drying to obtain an intermediate product with D₅₀ of 3 - 15 µm. Heat treatment was performed on the intermediate product under a nitrogen atmosphere, by heating at a rate of 0.7 °C/min to 380 °C and holding for 1 hour, and then heating at a rate of 2 °C/min to 650 °C and holding for 14 hours. Finally, a positive electrode material of lithium manganese iron phosphate was obtained by jet milling.

### Example 8

667.25 g of ferrous sulfate heptahydrate and 598.33 g of manganese sulfate monohydrate were taken to prepare a mixed iron-manganese salt solution with a concentration of 1 mol/L, where a molar ratio of Mn²⁺ to Fe²⁺ was approximately 5.9:4.0. 1078.01 g of potassium carbonate was taken to prepare potassium carbonate solution with a concentration of 1.3 mol/L, where a molar amount of potassium carbonate was approximately 1.31 times a total molar amount of the iron source and manganese source in the mixed iron-manganese salt solution. 2077.30 g of tripotassium phosphate trihydrate was taken to prepare tripotassium phosphate solution with a concentration of 1.3 mol/L, and 6 mol aqueous ammonia was added and mixed uniformly. Using the mixed iron-manganese salt solution as a base solution, the potassium carbonate solution was fed into a reactor, with nitrogen continuously introduced throughout the reaction for protection. After feeding was complete, aging was performed for 2 hours, and then the supernatant was extracted. The remaining slurry was heated to 30 °C, and the tripotassium phosphate solution was fed, followed by aging for 6 hours after feeding was complete, performing solid-liquid separation and washing, and drying in an oven at 75 °C for 24 hours to obtain ammonium manganese iron phosphate powder. It was found from main element detection and XRD analysis of the sample show that a chemical formula of the ammonium manganese iron phosphate was (NH₄)_{1.02}Fe_{0.4}Mn_{0.59}PO₄·H₂O.

The ammonium manganese iron phosphate, lithium carbonate, glucose, and PVP were weighed according to Li_{1.033}Fe_{0.4}Mn_{0.59}PO₄, with glucose and PVP accounting for 6% and 4% of the total materials, respectively. The above materials were mixed uniformly, and ground by wet method to D₅₀ of 0.8 µm, and then subjected to spray drying to obtain an intermediate product with D₅₀ of 3 - 15 µm. Heat treatment was performed on the intermediate product under a nitrogen atmosphere, by heating at a rate of 0.8 °C/min to 390 °C and holding for 1.5 hours, and then heating at a rate of 3 °C/min to 670 °C and holding for 12 hours. Finally, a positive electrode material of lithium manganese iron phosphate was obtained by jet milling.

### Example 9

477.14 g of ferrous chloride tetrahydrate and 700.60 g of manganese chloride tetrahydrate were taken to prepare a mixed iron-manganese salt solution with a concentration of 1 mol/L, where a molar ratio of Mn²⁺ to Fe²⁺ was approximately 5.9:4.0. 995.11 g of potassium carbonate was taken to prepare potassium carbonate solution with a concentration of 1.2 mol/L, where a molar amount of potassium carbonate was approximately 1.37 times a total molar amount of the iron source and manganese source in the mixed iron-manganese salt solution. 451.60 mL of phosphoric acid was taken to prepare phosphoric acid solution with a concentration of 1.1 mol/L, and 6 mol aqueous ammonia was added and mixed uniformly. Using the mixed iron-manganese salt solution as a base solution, the potassium carbonate solution was fed into a reactor, with nitrogen continuously introduced throughout the reaction for protection. After feeding was complete, aging was performed for 2 hours, and then the supernatant was extracted. The remaining slurry was heated to 40 °C, and the phosphoric acid solution was fed, followed by aging for 6 hours after feeding was complete, performing solid-liquid separation and washing, and drying in an oven at 75 °C for 24 hours to obtain ammonium manganese iron phosphate powder. It was found from main element detection and XRD analysis of the sample that a chemical formula of the ammonium manganese iron phosphate was (NH₄)_{1.02}Fe_{0.4}Mn_{0.59}PO₄·H₂O.

The ammonium manganese iron phosphate, lithium carbonate, and PEG were weighed according to Li_{1.0}Fe_{0.4}Mn_{0.59}PO₄, with PEG accounting for 7.50% of the total materials. The above materials were mixed uniformly, and ground by wet method to D₅₀ of 0.9 µm, and then subjected to spray drying to obtain an intermediate product with D₅₀ of 3 - 15 µm. Heat treatment was performed on the intermediate product under a nitrogen atmosphere, by heating at a rate of 1 °C/min to 400 °C, and then heating at a rate of 4 °C/min to 670 °C and holding for 10 hours. Finally, a positive electrode material of lithium manganese iron phosphate was obtained by jet milling.

### Example 10

417.43 g of iron acetate monohydrate and 867.62 g of manganese acetate tetrahydrate were taken to prepare a mixed iron-manganese salt solution with a concentration of 1 mol/L, where a molar ratio of Mn²⁺ to Fe²⁺ was approximately 5.9:4.0. 763.13 g of sodium carbonate was taken to prepare sodium carbonate solution with a concentration of 1.2 mol/L, where a molar amount of sodium carbonate was approximately 1.18 times a total molar amount of the iron source and manganese source in the mixed iron-manganese salt solution. 966.24 of ammonium dihydrogen phosphate was taken to prepare ammonium dihydrogen phosphate solution with a concentration of 1.4 mol/L. Using the mixed iron-manganese salt solution as a base solution, the sodium carbonate solution was fed into a reactor, with nitrogen continuously introduced throughout the reaction for protection. After feeding was complete, aging was performed for 2 hours, and then the supernatant was extracted. The remaining slurry was heated to 50 °C, and the ammonium dihydrogen phosphate solution was fed, followed by aging for 6 hours after feeding was complete, performing solid-liquid separation and washing, and drying in an oven at 75 °C for 24 hours to obtain ammonium manganese iron phosphate powder. It was found from main element detection and XRD analysis of the sample that a chemical formula of the ammonium manganese iron phosphate was (NH₄)_{1.02}Fe_{0.4}Mn_{0.59}PO₄-H₂O.

The ammonium manganese iron phosphate, lithium carbonate, and PVP were weighed according to Li_{1.19}Fe_{0.4}Mn_{0.59}PO₄, with PVP accounting for 5.50% of the total materials. The above materials were mixed uniformly, and ground by wet method to D₅₀ of 1 µm, and then subjected to spray drying to obtain an intermediate product with D₅₀ of 3 - 15 µm. Heat treatment was performed on the intermediate product under a nitrogen atmosphere, by heating at a rate of 1.2 °C/min to 400 °C and holding for 1 hour, and then heating at a rate of 5 °C/min to 690 °C and holding for 9 hours. Finally, a positive electrode material of lithium manganese iron phosphate was obtained by jet milling.

### Comparative Example 1

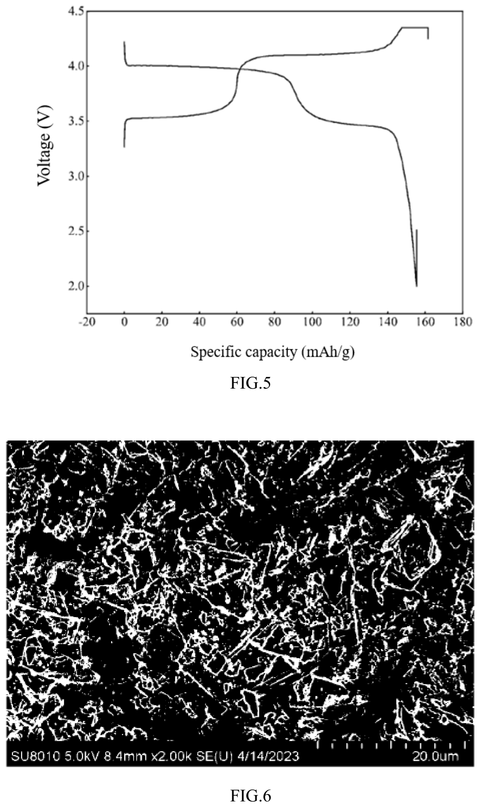

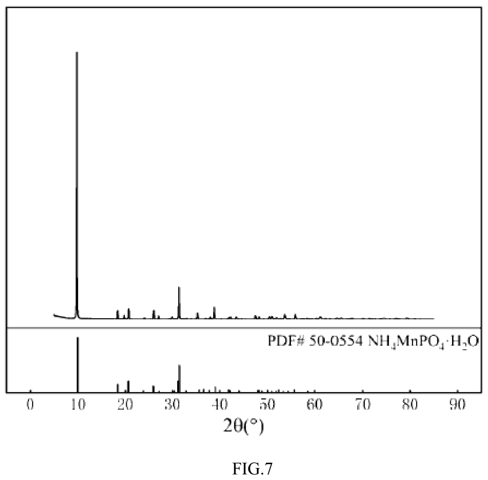

A mixed iron-manganese salt solution and ammonium dihydrogen phosphate solution were prepared using the same ratios as in Example 1. 8 L of pure water was added into a reactor as a base solution; and the mixed iron-manganese salt solution, the ammonium dihydrogen phosphate solution, and 10 mol/L of alkali were simultaneously fed into the reactor, with nitrogen continuously introduced throughout the reaction for protection. The pH of reaction process was controlled to be 5 - 7; and the temperature of reaction process was controlled to be 60 °C. After feeding was complete, aging was performed for 9 hours, followed by solid-liquid separation and washing, and drying in an oven at 75 °C for 24 hours to obtain ammonium manganese iron phosphate powder. It was found from main element detection and XRD analysis of the sample that a chemical formula of the ammonium manganese iron phosphate was NH₄Fe_{0.4}Mn_{0.60}PO₄·H₂O. The SEM image of the ammonium manganese iron phosphate at 2000× magnification was shown in FIG. 6, and the XRD pattern was shown in FIG. 7.

The ammonium manganese iron phosphate, lithium carbonate, glucose, and PEG were weighed according to Li_{1.030}Fe_{0.4}Mn_{0.60}PO₄, with glucose and PEG accounting for 5% and 7% of the total materials, respectively. The above materials were mixed uniformly, and ground by wet method to D₅₀ of 0.4 µm, and then subjected to spray drying to obtain an intermediate product with D₅₀ of 3 - 15 µm. Heat treatment was performed on the intermediate product under a nitrogen atmosphere, by heating at a rate of 0.6 °C/min to 370°C, and then heating at a rate of 2 °C/min to 650 °C and holding for 14 hours. Finally, a positive electrode material of lithium manganese iron phosphate was obtained by jet milling.

### Comparative Example 2

A mixed iron-manganese salt solution was prepared using the same ratio as in Example 1. 451.60 mL of phosphoric acid was taken to prepare phosphoric acid solution with a concentration of 1.1 mol/L. 8 L of pure water was added into a reactor as a base solution; and the mixed iron-manganese salt solution prepared, the phosphoric acid solution, and 5 mol/L of aqueous ammonia were simultaneously fed into the reactor, with nitrogen continuously introduced throughout the reaction for protection. The pH of reaction process was controlled to be 5 - 7; and the temperature of reaction process was controlled to be 60 °C. After feeding was complete, aging was performed for 9 hours, followed by solid-liquid separation and washing, and drying in an oven at 75 °C for 24 hours to obtain ammonium manganese iron phosphate powder. It was found from main element detection and XRD analysis of the sample that a chemical formula of the ammonium manganese iron phosphate was NH₄Fe_{0.4}Mn_{0.60}PO₄·H₂O.

The ammonium manganese iron phosphate, lithium carbonate, glucose, and PEG were weighed according to Li_{1.030}Fe_{0.4}Mn_{0.60}PO₄, with glucose and PEG accounting for 5% and 7% of the total materials, respectively. The above materials were mixed uniformly, and ground by wet method to D₅₀ of 0.4 µm, and then subjected to spray drying to obtain an intermediate product with D₅₀ of 3 - 15 µm. Heat treatment was performed on the intermediate product under a nitrogen atmosphere, by heating at a rate of 0.6 °C/min to 370 °C, and then heating at a rate of 2 °C/min to 650 °C and holding for 14 hours. Finally, a positive electrode material of lithium manganese iron phosphate was obtained by jet milling.

The ammonium manganese iron phosphate provided in Examples 1 to 10 and Comparative Examples 1 to 2 were each subjected to XRD, SEM, impurity ion detection, and particle size detection; and the results were shown in Table 1.

**Table 1**

| | D₅₀(µm) | A(010)/ A(121) | Vm [(Fe+Mn)/P] | Impurity ions (ppm) | | | |
|---|---|---|---|---|---|---|---|
| | | | | SO₄²⁻ | Cl⁻ | Na⁺ | K⁺ |
| Example 1 | 7.09 | 1.35 | 0.996 | 453 | - | - | - |
| Example 2 | 17.88 | 1.28 | 0.981 | 389 | - | - | - |
| Example 3 | 15.19 | 1.09 | 0.977 | 391 | - | - | - |
| Example 4 | 13.38 | 1.25 | 0.962 | 213- | - | - | - |
| Example 5 | 12.99 | 1.33 | 0.989 | 476 | - | - | - |
| Example 6 | 9.98 | 1.17 | 0.993 | - | 143 | 57 | - |
| Example 7 | 11.82 | 1.22 | 0.985 | - | | 41 | 135 |
| Example 8 | 16.57 | 1.01 | 0.987 | 218 | - | - | 151 |
| Example 9 | 11.14 | 1.05 | 0.991 | - | 0 | - | 0 |
| Example 10 | 12.63 | 1.34 | 0.996 | - | - | 174 | - |
| Comparative Example 1 | 37.79 | 1.65 | 1.032 | 4762 | - | 2578 | - |
| Comparative Example 2 | 45.09 | 1.76 | 1.014 | 5019 | - | - | - |

The positive electrode materials of lithium manganese iron phosphate provided in Examples 1 to 10 and Comparative Examples 1 to 2 were each subjected to electrochemical performance testing, and the results were shown in Table 2.

**Table 2**

| | Compaction density (g/cm³) | 0.2C discharge specific capacity (mAh/g) | 1C cycle capacity retention rate after 100 cycles (%) |
|---|---|---|---|
| Example 1 | 2.21 | 155.6 | 98 |
| Example 2 | 2.29 | 156.4 | 97 |
| Example 3 | 2.32 | 145.6 | 98 |
| Example 4 | 2.15 | 140.3 | 95 |
| Example 5 | 2.12 | 153.8 | 99 |
| Example 6 | 2.25 | 151.0 | 96 |
| Example 7 | 2.15 | 155.2 | 98 |
| Example 8 | 2.11 | 157.3 | 99 |
| Example 9 | 2.29 | 157.9 | 99 |
| Example 10 | 2.18 | 155.1 | 99 |
| Comparative Example 1 | 2.01 | 140.5 | 90 |
| Comparative Example 2 | 2.06 | 143.6 | 86 |

Combining with Table 1 and Table 2 as well as FIG. 5, it can be seen that compared to Comparative Examples 1 and 2, the D₅₀ of ammonium manganese iron phosphates provided in Examples 1 to 8 and Example 10 of the present application is less than about 15 µm; the concentration of impurity ion SO₄²⁻ or C is less than about 500 ppm; the concentration of impurity ion Na⁺ or K⁺ is less than about 200 ppm; and (Fe + Mn)/P < 1. The small particle size can effectively improve sanding efficiency; low concentration of impurity ions may prevent these soluble impurity ions from dissolving in the electrolyte, which affects capacity performance. The molar amount of phosphorus being greater than the total of the molar amounts of iron and manganese metal ions is conducive to avoiding that excessive manganese ions and/or iron ions block lithium-ion diffusion channels, reducing impedance. Therefore, the positive electrode material of lithium manganese iron phosphate prepared using the ammonium manganese iron phosphate from Examples 1 to 8 and Example 10 as a precursor exhibits high compaction density, specific capacity, and cycling performance. Particularly, it is found from testing of Example 9 that the concentrations of Cl⁺ and K⁺ are essentially zero. Compared to Examples 1 to 8 and Example 10, the positive electrode material of lithium manganese iron phosphate prepared using the ammonium manganese iron phosphate from Example 9 as a precursor simultaneously exhibits high compaction density as well as excellent specific capacity and cycling performance.

The technical features of the embodiments as described above may be combined arbitrarily. For the sake of conciseness, not all possible combinations of the technical features in the above embodiments have been described. However, as long as combinations of these technical features do not present contradictions, they shall all be considered within the scope disclosed in this specification.

The embodiments as above described merely represent several implementations of the present application, and the descriptions are specific and detailed, but should not therefore be construed as limitations on the scope of the patent for invention. It should be noted that, for those skilled in the art, without departing from the concept of the present application, various modifications and improvements may also be made, and all such modifications and improvements fall within the protection scope of the present application. Therefore, the protection scope of the present application shall be determined by the appended claims.

## Claims

1. An ammonium manganese iron phosphate serving as a precursor for lithium manganese iron phosphate, wherein a chemical formula of the ammonium manganese iron phosphate is (NH₄)_{(3-2x-2y)}FeₓMn_{y}PO₄·H₂O, wherein 0 < x ≤ 0.5, x + y < 1; a ratio of a diffraction peak area of (010) crystal plane to that of (121) crystal plane is less than 1.40;
wherein the ammonium manganese iron phosphate is free of SO₄²⁻, Cl⁻, Na⁺, and K⁺, or
the ammonium manganese iron phosphate comprises at least one impurity ion of SO₄²⁻, Cl⁻, Na⁺, or K⁺, with a concentration of any one impurity ion in the ammonium manganese iron phosphate being less than 500 ppm.

2. The ammonium manganese iron phosphate according to claim 1, wherein 0.5 < y < 0.9.

3. The ammonium manganese iron phosphate according to claim 1, wherein a total concentration of all impurity ions in the ammonium manganese iron phosphate is less than 1000 ppm.

4. The ammonium manganese iron phosphate according to any one of claims 1 to 3, wherein the ammonium manganese iron phosphate is flake-shaped, and has a particle size D₅₀ less than 20 µm.

5. A preparation method for the ammonium manganese iron phosphate according to any one of claims 1 to 4, comprising the following steps:
performing a primary reaction between a mixed iron-manganese salt solution and a carbonate solution, and performing separation to obtain manganese iron carbonate;
performing a secondary reaction by mixing a phosphorus source solution with the manganese iron carbonate, and performing separation to obtain the ammonium manganese iron phosphate, wherein a molar amount of phosphorus source in the phosphorus source solution is 1 - 1.5 times a total molar amount of iron source and manganese source in the mixed iron-manganese salt solution.

6. The preparation method for the ammonium manganese iron phosphate according to claim 5, wherein the mixed iron-manganese salt solution comprises the iron source, the manganese source, and an antioxidant, wherein a molar ratio of the iron source to the manganese source is 1:9 - 1:1, and a mass of the antioxidant is 0.5% - 2.0% of a mass of the iron source.

7. The preparation method for the ammonium manganese iron phosphate according to claim 6, wherein the iron source is selected from at least one of ferrous sulfate, ferrous chloride, and iron acetate;
and/or, the manganese source is selected from at least one of manganese sulfate, manganese chloride, and manganese acetate;
and/or, the antioxidant is selected from at least one of citric acid, ascorbic acid, formaldehyde, salicylic acid, and oxalic acid.

8. The preparation method for the ammonium manganese iron phosphate according to claim 5, wherein a molar amount of the carbonate is 1 - 3 times the total molar amount of the iron source and the manganese source in the mixed iron-manganese salt solution, and the carbonate is selected from at least one of ammonium bicarbonate, sodium carbonate, and potassium carbonate.

9. The preparation method for the ammonium manganese iron phosphate according to claim 5, wherein the phosphorus source is selected from at least one of ammonium dihydrogen phosphate, diammonium hydrogen phosphate, trisodium phosphate, tripotassium phosphate, and phosphoric acid, and the phosphorus source comprises ammonium ions.

10. The preparation method for the ammonium manganese iron phosphate according to claim 9, wherein when the phosphorus source comprises at least one of trisodium phosphate, tripotassium phosphate, and phosphoric acid, the ammonium ions in the phosphorus source are derived from at least one of ammonium dihydrogen phosphate, diammonium hydrogen phosphate, and aqueous ammonia.

11. The preparation method for the ammonium manganese iron phosphate according to claim 5, wherein the secondary reaction is carried out under a protective atmosphere, with a reaction temperature being 20 °C - 80 °C and a reaction time being within 30 hours.

12. A lithium manganese iron phosphate, prepared from the ammonium manganese iron phosphate according to any one of claims 1 to 4, wherein a chemical formula of the lithium manganese iron phosphate is LiₙFeₓMn_{y}PO₄, 0 < x ≤ 0.5, x + y < 1, and 1 ≤ n < 1.2.

13. A preparation method for the lithium manganese iron phosphate according to claim 12, comprising the following steps:
compounding a lithium source, a carbon source, and the ammonium manganese iron phosphate according to any one of claims 1 to 5 to obtain an intermediate product;
calcining the intermediate product in an inert atmosphere to obtain the lithium manganese iron phosphate.

14. The preparation method for the lithium manganese iron phosphate according to claim 13, wherein the ammonium manganese iron phosphate, the lithium source, and the carbon source are subjected to mixing, crushing, and then spray granulating to obtain the intermediate product.

15. The preparation method for the lithium manganese iron phosphate according to claim 13 or 14, wherein a molar amount of the lithium source is 1 - 1.2 times a molar amount of phosphorus element in the ammonium manganese iron phosphate, and the lithium source is selected from at least one of lithium hydroxide, lithium carbonate, lithium acetate, and lithium nitrate;
and/or, a mass of the carbon source is 2% - 14% of a total mass of the lithium source and the ammonium manganese iron phosphate, and the carbon source is selected from at least one of glucose, sucrose, fructose, lactose, citric acid, starch, polyvinylpyrrolidone, polyethylene glycol, polyacrylonitrile, phenolic resin, phenylalanine, graphite, graphene, graphene oxide, and carbon nanotubes.

16. The preparation method for the lithium manganese iron phosphate according to claim 13, wherein the calcining is selected from a multi-gradient heat treatment process, which comprises: a first stage of heating to 300 °C - 400 °C at a rate of 0.4 °C/min - 1.6 °C/min and holding within 3 hours; and a second stage of heating to 600 °C - 800 °C and holding for 5 - 20 hours.

17. Use of the ammonium manganese iron phosphate according to claim 12 as a positive electrode material for lithium-ion batteries.
